(19) Europäisches Patentamt

European Patent Office

Office européen des brevets

(11) **EP 1 686 740 A1**

(12) **EUROPEAN PATENT APPLICATION**

(43) Date of publication:
**02.08.2006 Bulletin 2006/31**

(51) Int Cl.:
*H04L 12/56* (2006.01)  *H04L 12/18* (2006.01)
*H04L 29/06* (2006.01)

(21) Application number: **06004502.8**

(22) Date of filing: **09.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.08.2003 KR 2003055086**
 **18.11.2003 KR 2003081686**
 **04.12.2003 KR 2003087768**

(62) Document number(s) of the earlier application(s) in accordance with Art. 76 EPC:
**04018841.9 / 1 505 793**

(71) Applicant: **Samsung Electronics Co., Ltd.**
**Suwon-si**
**Gyeonggi-do (KR)**

(72) Inventors:
• **Kim, Soeng-Hun**
 **Samsung Electronics Co., Ltd.**
 **Suwon-si**
 **Gyeonggi-do (KR)**

• **Lee, Kook-Heui**
 **Samsung Electronics Co., Ltd.**
 **Suwon-si**
 **Gyeonggi-do (KR)**
• **Choi, Sung-Ho**
 **Samsung Electronics Co., Ltd.**
 **Suwon-si**
 **Gyeonggi-do (KR)**
• **Van Lieshout, Gert Jan**
 **Samsung Electronics Co. Ltd**
 **Suwon-si**
 **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

Remarks:
This application was filed on 06 - 03 - 2006 as a divisional application to the application mentioned under INID code 62.

(54) **Method and apparatus for configuring protocols for a multimedia broadcast/multicast service**

(57) A method and apparatus for providing an MBMS service to a plurality of cells in a mobile communication system are provided. In a mobile communication system including an RNC for providing an MBMS service and a plurality of Node Bs connected to the RNC, for providing the MBMS service to UEs within a plurality of cells. The RNC is configured to have a plurality of lower-layer entities corresponding to the cells. An RLC and PDCP entity that area common to the cells, receive MBMS data from an upper layer and transmit, upon receiving a request from one of the lower-layer entities, the MBMS data to the lower-layer entity. Therefore, the RNC can provide the MBMS service more efficiently, and unnecessary consumption of system resources is reduced.

FIG.15

**Description**

**BACKGROUND OF THE INVENTION**

1. Field of the Invention

The present invention relates generally to an MBMS (Multimedia Broadcast/Multicast Service) in a mobile communication system, and in particular, to a method and apparatus for providing an MBMS service to a plurality of cells utilizing a common protocol entity.

2. Description of the Related Art

UMTS (Universal Mobile Telecommunication Service), which is one of the 3$^{rd}$ generation mobile communication systems, is based on the GSM (Global System for Mobile communication) and GPRS (General Packet Radio Services) communication standards. Yet, it uses the WCDMA (Wideband Codo Division Multiple Access) technology, whereas GSM utilizes TDMA (Time Division Multiple Access). UMTS provides a uniform service that transmits packetized text, digital voice and video, and multimedia data at a 2Mbps or higher rate to mobile subscribers or computer users around the world. With the introduction of the concept of virtual access, UMTS enables access to any end point in a network all the time. The virtual access refers to packet-switched access using a packet protocol like IP (Internet Protocol).

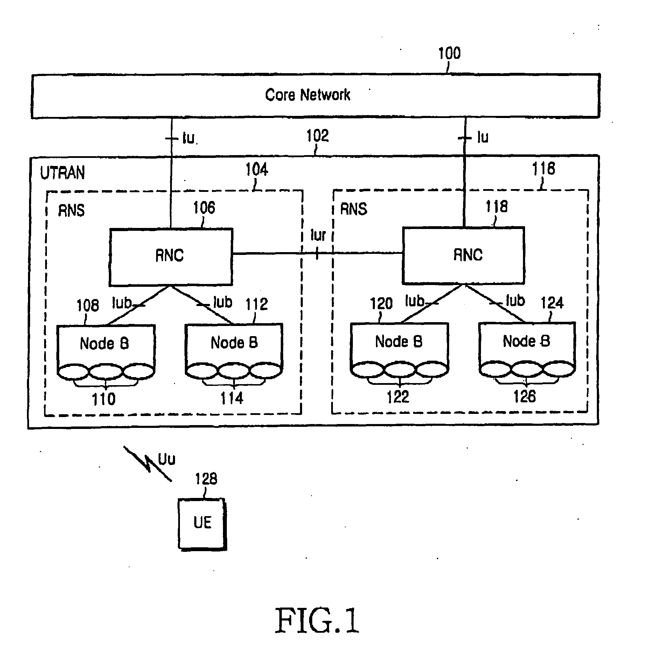

FIG 1 illustrates a conventional UTRAN (UMTS Terrestrial Radio Access Network). Referring to FIG 1, a UTRAN 102 includes a plurality of cells 110,114, 122, and 126 and Node Bs 108, 112, 120, and 124, and RNCs (Radio Network Controllers) 106 and 118. The UTRAN 102 connects a UE (User Equipment) 128 to a core network (CN) 100. The RNC 106 controls the Node Bs 110 and 114, and the RNC 118 controls the Node Bs 120 and 124. The Node Bs 108, 112, 120, and 124 control their cells 110,114,122, and 126, respectively.

An RNC, and Node Bs and cells under the control of the RNC are collectively called an RNS (Radio Network Subsystem). The RNCs 106 and 118 are connected to the Node Bs 108, 112, 120, and 124 via lub interfaces, and the RNC 106 is connected to the RNC 118 via an lur interface.

The RNCs 106 and 118 assign or manage the Node Bs 108, 112, 120, and 124 under their control. The Node Bs 108, 112, 120, and 124 provides actual radio resources. The radio resources are configured for each cell, and the radio resources provided by the Node Bs 108, 112, 120, and 124 are for cells within their coverage areas. The UE 128 establishes a radio channel using radio resources provided by a particular Node B and communicates on the radio channel. Typically, from the UE's perspective, discrimination between a Node B and a cell is meaningless. The UE 128 only recognizes physical channels established on a cell basis. Therefore, the terms Node B and cell are interchangeably used herein.

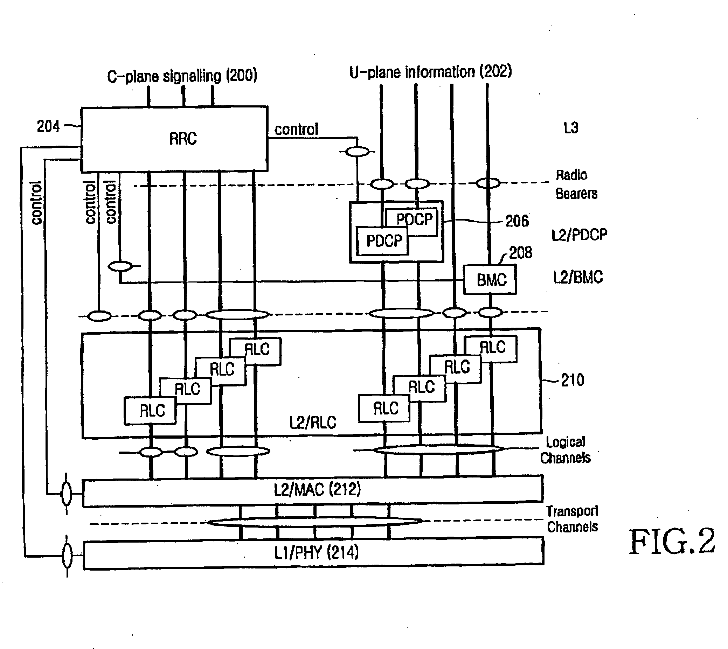

A Uu interface is defined between a UE and an RNC. The hierarchical protocol architecture of the Uu interface is illustrated in detail in FIG. 2. Like the lu or lub interface, the Uu interface is considered as a protocol stack configured for communications between nodes. The Uu interface will be described separately into a control plane (C-planc) for exchanging control signals between the UE and the RNC and a user plane (U-plane) for transmitting actual data.

Referring to FIG 2, C-plane signaling 200 is processed through an RRC (Radio Resource Control) layer 204, an RLC (Radio Link Control) layer 210, a MAC (Medium Access Control) layer 212, and a PHY (PHYsical) layer 214. U-plane information 202 is processed through a PDCP (Packet Data Control Protocol) layer 206, a BMC (Broadcast/ Multicast Control) layer 208, the RLC layer 210, the MAC layer 212, and the PHY layer 214. The PHY layer 214 is defined in each cell, and from the MAC layer 212 through the RRC layer 204 is defined in each RNC.

The PHY layer 214 provides an information delivery service by a radio transfer technology, and corresponds to layer 1 (L1) in an OSI (Open Systems Interconnection) model. The PHY layer 214 is connected to the MAC layer 212 via transport channels. The transport channels are defined according to how data is processed in the PHY layer 214. The PHY layer 214 encodes MBMS data with a scrambling code specific to each cell and a channelization code specific to each physical channel, for radio transmission.

The MAC layer 212 is connected to the RLC layer 210 via logical channels. The MAC layer 212 delivers data received from the RLC layer 210 to the PHY layer 214 on appropriate transport channels. It also delivers data received from the PHY layer 21 A on transport channels to the RLC layer 210 on appropriate logical channels. The MAC layer 212 inserts additional information into data received on logical channels or transport channels or performs an appropriate operation by interpreting inserted additional information, and controls random access.

The RLC layer 210 controls the establishment and release of the logical channels. The RLC layer 210 operates in one of an acknowledged mode (AM), an unacknowledged mode (UM), and a transparent mode (TM). Typically, in the UM, the RLC layer 210 segments an SDU (Service Data Unit) to an appropriate size, concatenates SDUs, and corrects errors by ARQ (Automatic Repeat request). In the TM, the RLC layer 210 just delivers SDUs without any processing.

The PDCP layer 206 is an upper layer than the RLC layer 210 on the U-plane. The PDCP layer 206 is responsible for compression and decompression of the header of data in the form of an IP packet and lossless data delivery when an RNC for providing service to a particular UE is changed due to mobility. While for a general service, the PDCP layer 206 supports lossless SRNS (Serving RNS) relocation and compresses headers, for an MBMS service, it does not need to support the lossless SRNS relocation in view of the nature of broadcasting/multicasting. The SRNS relocation is resetting of an RNC to which a UE moves from an old SRN as a new SRNC. The BMC layer 208 is in an upper layer than the RLC layer 210, and supports a broadcasting service in which the same data is delivered to unspecified multiple UEs.

At a call setup for a particular service, an RNC configures entities for performing protocol operations in the respective PDCP, RLC, MAC, and PHY layers in order to provide the service. A set of the protocol entities are called a radio bearer (RB). Each protocol entity can be configured as a software block. An access point between protocol entities is called an SAP (Service Access Point). For example, an access point between PDCP and RLC entities is an RLC SAP. Through the RLS SAP, the PDCP entity delivers primitives such as RLC-DATA-REQ, which is user data, to the RLC entity.

The RRC layer 204 is responsible for the assignment and release of resources between a UTRAN and a UE. The RRC layer 204 manages resources assigned to UEs in an RRC connected mode, manages their mobility, and delivers CN signals to the UEs.

The above-described protocol configuration between the UE and the RNC in the UMTS communication system is based on point-to-point (PtP) connection. In an MBMS service in which the same multimedia is transmitted to a plurality of receivers over a radio network, the receivers share a single radio channel to save radio transmission resources. For the MBMS service, the PDCP layer 206 controls only functions related to header compression and decompression. Because the MBMS service is provided only on the downlink, the header compression function is performed in the RNC and the header decompression function is performed in the UE.

In the MBMS service, transmission of the same data from one RNC to a plurality of UEs is equivalent to transmission of the same data from the RNC to a plurality of cells where the UBs are positioned. Therefore, a point-to-multiple (PtM) connection is established between the RNC and the UEs. Accordingly, the MBMS service is different from an existing unicast service in which one RNC transmits data to one UE. Therefore, use of one PDCP entity, one RLC entity, one MAC entity, and one PHY entity per RB, as done in existing services, consumes system resources considerably and increases service delay at the same time.

## SUMMARY OF THE INVENTION

An object of the present invention is to substantially solve at least the above problems and/or disadvantages and to provide at least the advantages below. Accordingly, an object of the present invention is to provide a method and apparatus for reducing RNC processing load by configuring an RB for an MBMS service using one PDCP entity and one header compressor in an MBMS mobile communication system.

Another object of the present invention is to provide a method for operating one common PDCP entity connected to a plurality of lower-layer protocol entities to provide an MBMS service, and a configuration of the PDCP entity.

A further object of the present invention is to provide a method and apparatus for reducing RNC processing load by configuring an RB for an MBMS service in a PtP mode in an MBMS mobile communication system.

Still another object of the present invention is to provide a method and apparatus for reducing RNC processing load by forming a common RLC entity in configuring an MBMS RB for processing MBMS data.

The above objects are achieved by providing a method and apparatus for providing an MBMS service to a plurality of cells in a mobile communication system. In a mobile communication system having an RNC for providing an MBMS service and a plurality of Node Bs connected to the RNC, for providing the MBMS service to UEs within a plurality of cells, the RNC is configured to have a plurality of lower-layer entities corresponding to the cells, and an RLC and PDCP entity common to the cells, for receiving MBMS data from an upper layer and, upon request from one of the lower-layer entities, transmitting the MBMS data to the lower-layer entity

## BRIEF DESCRIPTION OF THE DRAWINGS

The above and other objects, features, and advantages of the present invention will become more apparent from the following detailed description when taken in conjunction with the accompanying drawings in which:

FIG 1 illustrates a typical UTRAN to provide an MBMS service;
FICz 2 illustrates a hierarchical protocol architecture of an interface between a UE and an RNC;
FIG 3 illustrates the configuration of an MBMS mobile communication system;
FIG. 4 is a diagram illustrating a signal flow for an MBMS service providing procedure;
FIGS. 5A and 5B illustrate the configurations of PDCP entities for header compression;
FIG 6 illustrates an MBMS RB in an RNC according to a preferred embodiment of the present invention;

FIG 7 illustrates a detailed structure of the PDCP entity for transmitting MBMS data to a plurality of cells according to the embodiment of the present invention;

FIG 8 is a flowchart illustrating an operation for configuring a common PDCP entity for one MBMS service according to an embodiment of the present invention;

FIG 9 is a flowchart illustrating an operation for processing MBMS data in the PDCP entity according to an embodiment of the present invention;

FIG 10 illustrates the configuration and operation of the PDCP entity for selectively transmitting an MBMS control packet according to an embodiment of the present invention;

FIG 11 illustrates a processing chain for processing MBMS data in an RNC according to an embodiment of the present invention;

FIG 12 illustrates a detailed configuration of the common RLC entity according to an embodiment of the present invention;

FIG 13 is a flowchart illustrating an operation for configuring the common RLC entity according to an embodiment of the present invention;

FIG 14 is a flowchart illustrating an operation for processing data received from an upper layer in the common RLC entity according to an embodiment of the present invention;

FIG 15 illustrates a common RLC entity according to another embodiment of the present invention;

FIG 16 is a flowchart illustrating an operation for configuring the common RLC entity according to an embodiment of the present invention;

FIG 17 is a flowchart illustrating an operation for processing data received from an upper layer in the common RLC entity according to an embodiment of the present invention;

FIG 18 illustrates the configuration of a common RLC entity according to an embodiment of the present invention; and

FIG. 19 is a flowchart illustrating an operation for configuring the common RLC entity according to an embodiment of the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides an MBMS RB configuration that reduces RNC processing load by using only one layer entity, even when an MBMS RB for processing MBMS data is configured across a plurality of cells on the Uu interface between an RNC and a UE. The MBMS RB is a set of PDCP/RLC/MAC/PHY layers that process MBMS data received via a lu interface in a form suitable for transmission on the Uu interface.

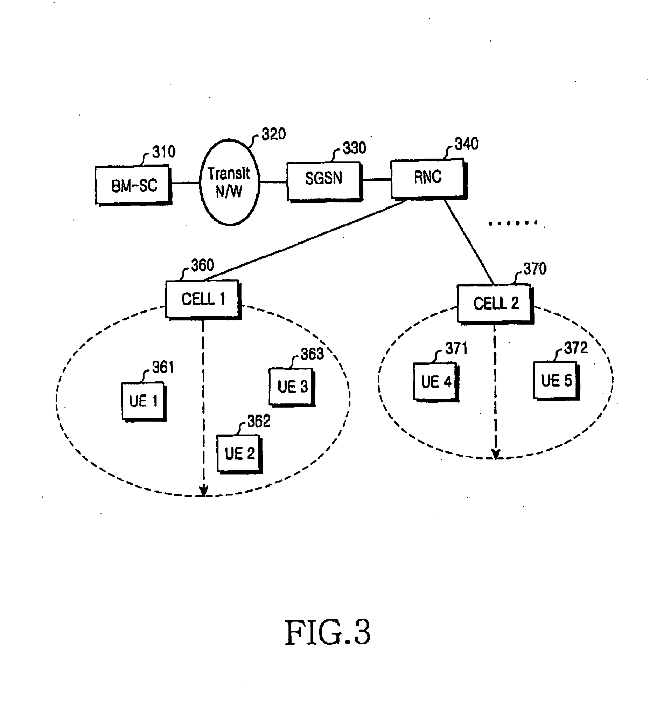

FIG 3 illustrates a simplified configuration of an MBMS mobile communication system for providing an MBMS service based on the 3rd generation asynchronous mobile communication standard of 3GPP (3rd Generation Project Partnership). Referring to FIG 3, UEs 361, 362, 363, 371, and 372 are terminal devices or subscribers capable of receiving an MBMS service. A first cell 360 (cell 1) and a second cell 370 (cell 2) are base station devices that transmit MBMS-related data to subscribers. As illustrated in FIG 3, only one radio channel is established between cell 1 and the UEs 361, 362, and 363. An RNC 340 is a radio network controller that controls a plurality of cells. More specifically, the RNC 340 selectively transmits multimedia data to a particular cell and controls a radio channel established for an MBMS service.

An SGSN (Serving GPRS Supporting Node) 330 controls MBMS-related services for each subscriber. Its major control operations are management of billing data for services provided to each subscriber and selective transmission of multimedia data to a particular RNC. A transit network (N/W) 320 provides a path between a BM-SC (Broadcast/Multicast Service Center) 310 and the SGSN 330. The transit N/W 320 may be configured to have a GGSN (Gateway FPRS Support Node) and an external CN. The BM-SC 310 is a source of MBMS data and schedules data for each service.

An MBMS data stream generated from the BM-SC 340 is delivered to the UEs 361, 362, 363, 371, and 372 through the transit N/W 320, the SGSN 330, the RNC 340, and the cells 360 and 370. While not shown, a plurality of SGSNs may exist for one MBMS service and a plurality of RNCs may exist for each SGSN'. An SGSN selectively transmits data to an RNC and the RNC selectively transmits data to cells. As a result, a list of destinations (i.e., an RNC list in an SGSN and a cell list in an RNC) must be stored and MBMS data is selectively transmitted to the destinations referring to the stored list.

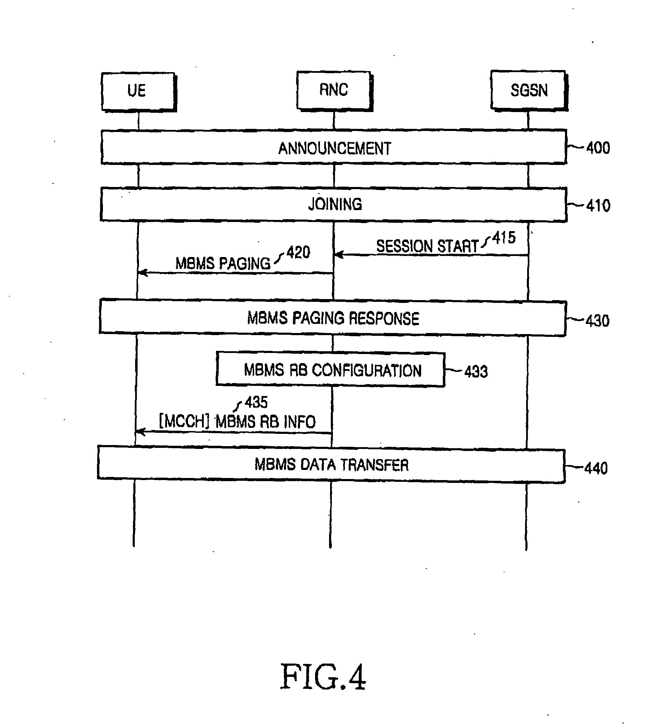

FIG. 4 is a diagram illustrating a signal flow for an MBMS service providing procedure. To describe an example of an MBMS service providing procedure in a cell, a signal flow among a UE that receives an MBMS service, an RNC, and an SGSN is illustrated.

Referring to FIG 4, in step 400, the SGSN notifies the UE through the RNC of basic information about the MBMS service, for example, the IDs of MBMS services and information indicating whether the MBMS services are available (Announcement). If the MBMS services include an MBMS service the UE requests, in step 410, the UE notifies the SGSN through the RNC that it will join the intended MBMS service (Joining).

In the joining step 410, the UE notifies the SGSN of the ID of the intended MBMS service. The SGSN authenticates the UE and notifies the UE whether the MBMS service is available to the UE, by exchanging an Activate MBMS Context Request message and an Activate MBMS Context Accept message. The SGSN stores a list of UEs that want the particular MBMS service and their locations.

When a BM-SC announces the initiation of the MBMS service, the SGSN transmits a Session Start message to the RNC having the UE within its coverage area in step 415. In step 420, the RNC transmits an MBMS Paging message to the UE on a common channel, such as an S-CCPCH (Secondary Common Control Physical Channel), to page the UE. Because a plurality of UEs that join the MBMS service are paged by the MBMS Paging message, step 420 is called group paging, in contrast to a conventional paging procedure.

In step 430, the UE transmits an MBMS Paging Response for the paging. As a result, the RNC receives knowledge of the number of UEs requesting to receive the MBMS in each cell and determines the type of a radio channel (i.e., service type) for each cell. That is, if the number of UEs that want the MBMS service is equal to or larger than a predetermined threshold, the MBMS service is provided to them on a common channel in a PtM mode. If the number is less than the threshold, dedicated channels are established for the respective UEs and the MBMS service is provided to the UEs on the dedicated channels in a PtP mode. Step 430 is performed by exchanging control messages between the RNC and the UE, or between the SGSN and the UE.

When the service type is determined as PtP, the MBMS service is provided in the same manner as the conventional unicast service. However, when the service type is PtM, a connection between an RNC and a plurality of UEs must be established.

In step 433, the RNC configures an MBMS RB for providing the MBMS service to the plurality of UEs. The MBMS RB is related to a radio channel that will deliver the MBMS service. The RNC transmits MBMS RB configuration information to the UEs on MBMS control channels (MCCHs) in step 435. The MBMS RN configuration information contains, for example, OVSF (Orthogonal Variable Spreading Factor) code information, transport format information, RLC information, PDCP information, etc.

Typically, one MCCH is configured for each cell and mapped onto a common channel such as the S-CCPCH. The UEs acquire information on the MCCHs as system information. In step 440, the UE receives MBMS data according to the MBMS RB configuration information.

A UTRAN provides data for a service in a hierarchical structure of PDCP/RLC/MACIPHY The RDCP/RLCIMAC layer is in an RNC, and the PHY layer is in a Node B. For an MBMS service, UEs that want the same MBMS service may be located in different cells. In this case, MBMS data must be delivered to the cells.

However, configuring of PDCP/RLC/MAC/PHY entities for each cell to provide the MBMS service is very inefficient. In practice, MBMS data that an upper-layer network element (e.g., SGSN) provides to the RNC is processed equally in the upper layers of PDCP and RLC, and then processed differently according to cells in the lower layers. Therefore, one common layer entity is configured for one MBMS service in an RNC and lower-layer entities operate separately for the respective cells in the present invention.

A significant data process in the PDCP entity is header compression/decompression. In an MBMS service provided over an IP network, MBMS data is IP/UDP (User Datagram Protocol)/RTP (Real-time Transfer Protocol) packets because the most important application for the MBMS service is a multimedia streaming service and the most prominent scheme for provisioning of the multimedia streaming service is IP/UDP/RTP. An IP/UDP/RTP packet includes an IP header, a UDP header, and an RTP header, which occupy 40 to 60 bytes. Therefore, the IP/UDP/RTP packet is too bulky for wireless transmission

The PDCP entity compresses IP/UDP/RTP header of a transmission data packet to several bytes by removing static fields from its header and transmits the compressed data packet to the lower RLC layer. It recovers a compressed header of a received data packet referring to a pre-storrd header context. For example, a header compression technique called ROHC (Robust Header Compression) is applied to the MBMS. As a result, the PDCP entity that processes MBMS data is provided with an ROHC header compressor and decompressor. The same header compression technique is used for the same MBMS service.

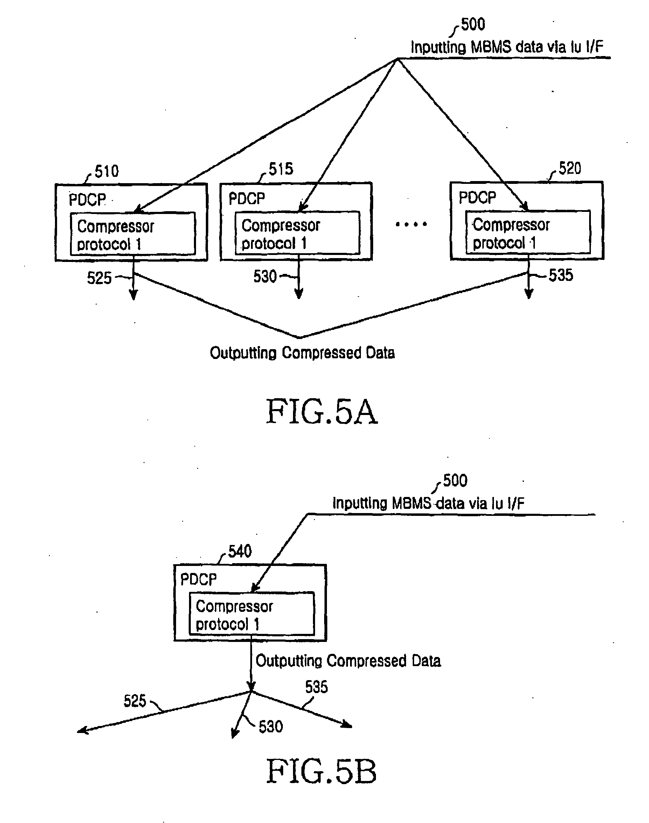

FIGs. 5A and 5B illustrate the configurations of PDCP entities for header compression. FIG 5A illustrates header compression using a PDCP entity for each cell. Each PDCP entity is provided with a header compressor 510, 515, or 520. If the header compressors 510, 515, and 520 in different cells are configured to process the same MBMS data, the MBMS data is equally input to the compressors 510, 515, and 520 via an lu interface and the compressors 510, 515, and 520 compress the MBMS data by the same header compression protocol. The same compressed data 525, 530, and 535 are output from the header compressors 510, 515, and 520,

**FIG.** 5B illustrates compression of the header of MBMS data 500 in a single header compressor 540 and delivery of the compressed data to cells. Although one PDCP entity is used for a plurality of cells, the same compressed header data 525, 530, and 535 is delivered to the cells.

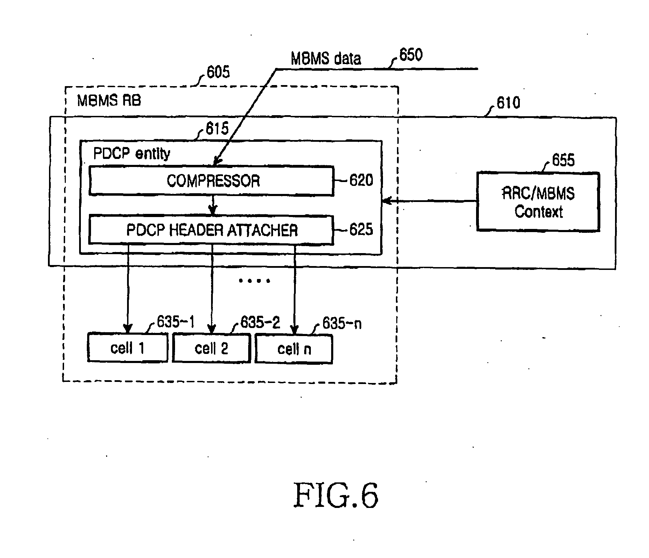

FIG. 6 illustrates an MBMS RB 605 in an RNC 610 according to a preferred embodiment of the present invention. The MBMS RB 605 is configured to broadcast data for a particular MBMS service to n cells.

Referring to FIG 6, the MBMS RB 605 includes a PDCP entity 615, which is common to n cells 635-1 to 63S-n, for which MBMS data 650 is destined. The PDCP entity 615 has a header compressor 620 and a PDCP header attacher 625. The header compressor 620 compresses the header of a data packet received via a lu interface based on a pre-configured RRC/MBMS context 655. The PDCP header attacher 625 attaches a PDCP header to the compressed data. The output data of the PDCP entity 615 is provided to the cells 635-1 to 635-n.

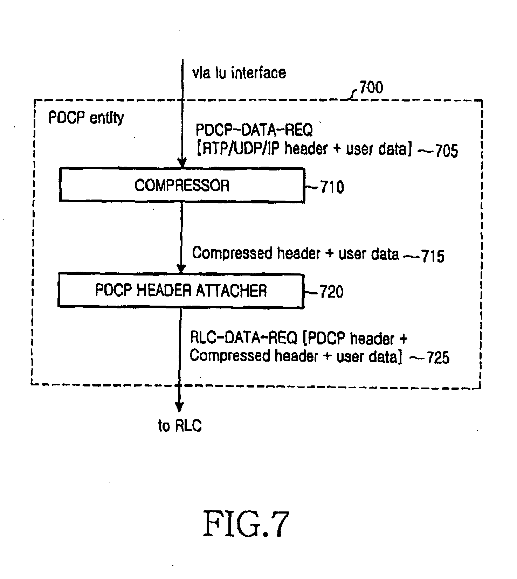

FIG 7 illustrates a detailed structure of the PDCP entity for transmitting MBMS data to a plurality of cells according to an embodiment of the present invention. Referring to FIG. 7, after receiving a PDCP-DATA-REQ primitive 705, which includes data for a particular MBMS service, via a lu interface, a PDCP entity 700 constructs an RLC-DATA-REQ primitive destined for an RLC SAP. An SAP refers to an access point between the PDCP layer and the RLC layer. That is, transmission of data through an SAP means transmission of data to a corresponding RLC entity.

More specifically, the PDCP-DATA-REQ primitive 705 includes upper-layer protocol headers and user data. The upper-layer protocols can be RTP/UDP/IP or UDP/IP. but RTP/UDP/IP is utilized herein for better understanding of the present invention. The user data is data to be transmitted to actual UEs via Uu interfaces. For example, the user data is video data.

Upon input of the PDCP-DATA-REQ primitive 705, a header compressor 710 compresses the RTP/UDP/IP header included in the PDCP-DATA-REQ primitive 705 by a predetermined header compression protocol and transmits the compressed header and the user data to a PDCP header inserter 720. The header compression protocol can be robust header compression (ROHC) or RFC2507. The header compressor 710 selects a header compression protocol to be used under the control of the RRC layer. The PDCP entity 700 has a different header compressor for each service. Information about each header compressor is transmitted to a receiver in a PDCP header field.

The PDCP header inserter 720 inserts a 1-byte PDCP header into data 715 received from the header compressor 710, thereby creating an RLC-DATA-REQ primitive 725. The RLC-DATA-REQ primitive 725 includes the PDCP header and PDCP data with the compressed header and the user data. The PDCP header includes a PDU (Protocol Datagram Unit) Type field and a PID (packet Identifier) field. The PDU Type field indicates whether the RLC-DATA-REQ primitive 725 is data compressed by a header compression protocol or data including additional information for supporting lossless SRNS relocation. If the RLC-DATA-REQ primitive 725 is compressed data, the PID field contains additional information related to header compression. For example, the type of the used header compression protocol and CID (Context Identifier), which is the ID of a header context (HC), are written in the PID field. The RLC-DATA-REQ primitive 725 is transmitted to the RLC layer and then distributed to a plurality of cells.

Upon receiving MBMS Paging Response messages from UEs that join a particular MBMS service, an RNC determines to provide the MBMS service to the cells having the UEs within their coverage areas and stores information about the MBMS service as an MBMS Context (655 in FIG 6). The MBMS Context includes information related to the MBMS service, for example, a list of the UEs that want the MBMS service, a list of the cells to which the MBMS service is to be provided, information about a PHY entity for each of the cells (code and frequency information, etc.), information about RLC and MAC entities for each of the cells (e.g. transport format combination information), and PDCP entity information.

The RNC configures an MBMS RB referring to the cell list in the MBMS Context. Configuring the MBMS RB means that PHY/MAC/RLC/PDCP entities are configured for each of the cells to which the MBMS service is to be provided. The PHY entities are configured in Node Bs corresponding to the cells.

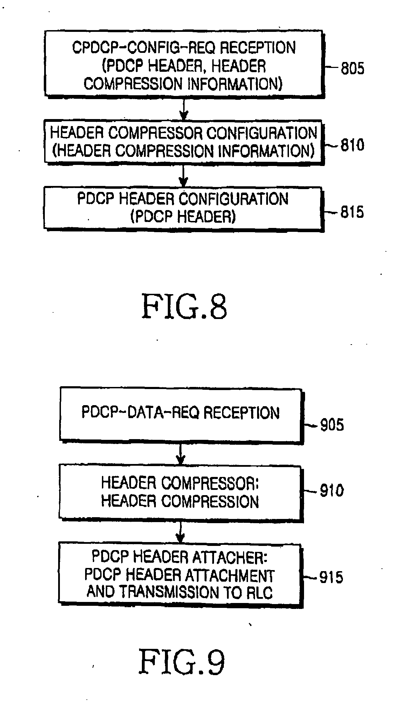

FIG 8 is a flowchart illustrating an operation for configuring a PDCP entity for one MBMS service common by a plurality of cells according to the embodiment of the present invention. Referring to FIG 8, the PDCP layer receives a CPDCP-CONFIG-REQ primitive from the RRC layer in step 805. The CPDCP-CONFIG-REQ primitive includes parameters such as PDCP header information and header compression information. The header compression information is information needed to configure a header compressor and the PDCP header information is information needed to configure a PDCP header inserter.

In step 810, the PDCP layer configures a header compressor using the header compression information. The header compression information has a header compression protocol type and parameters required to configure the header compressor using a corresponding protocol. For example, to configure an ROHC header compressor, the header compression information contains ROHC-related configuration information, that is, profiles that the header compressor supports and a maximum CID value for header compression. The profiles refer to protocols that can be compressed by ROHC (i.e. IP/UDP/RTP or IP/UDP). The ROHC header compressor can be configured to support at least one of the three protocols.

In step 815, the PDCP layer configures a PDCP header inserter using the PDCP header information. The PDCP header information is "present" or "not present" indicating whether a PDCP header is to be attached or not, respectively. More specifically if the PDCP header information is "present", a PDCP header inserter is configured and if it is "not present", the PDCP header inserter is not configured.

FIG. 9 is a flowchart illustrating an operation for processing MBMS data in the thus-configured PDCP entity according to an embodiment of the present invention. Referring to FIG 9, upon receiving MBMS data via the lu interface, the RNC delivers the MBMS data in the form of a PDCP-DATA-REQ primitive to the PDCP entity in step 905. The PDCP-DATA-REQ primitive includes an RTP/UDP/IP header and user data, and is transmitted to the header compressor of the PDCP entity.

In step 910, the header compressor compresses the RTP/UDP/IP header by a predetermined header compression protocol, such as ROHC, and transmits the compressed header and the user data to the PDCP header inserter.

The PDCP header inserter attaches a PDCP header having a PDU Type field and a PID field to the received data. The resulting data is called an RLC-DATA-REQ primitive. If the PDCP entity is configured not to have a PDCP header inserter, step 915 is not performed and the processed data of the header compressor becomes the RLC-DATA-REQ primitive. The RLC-DATA-REQ primitive is transmitted to the RLC layer to be delivered to a plurality of cells.

The thus-configured MBMS RB is characterized in that one lower-layer entity is configured for each cell and one common PDCP entity is configured for the lower-layer entities. Therefore, header compression occurs only once in the PDCP entity, thereby reducing RNC processing load.

For example, if a plurality of UEs in cells A, B, and C are to receive a particular MBMS service, the RNC configures an MBMS RB having one PDCP entity to provide the MBMS service, and transmits MBMS data to cells A, B, and C via the MBMS RB. Upon receiving a request for the MBMS service from cell D, the RNC configures new lower-layer entities to process data for cell D and transmits the MBMS data to the existing PDCP layer.

Every header compression protocol works normally under the situation in which a header compressor and a header decompressor share basic information needed for header compression and decompression. The basic information includes static field values, which are unchanged during the service, and default values of regularly changing fields. A full header packet in RFC 2507 and an IR (Initializing & Refresh) or IR-DYN (Initializing and Refresh Dynamic) packet in ROHC provide such basic information. The header compressor transmits the basic information to the header decompressor before header compression and decompression. An ROHC header compressor initially transmits an IR packets several times, thereby providing basic information to header decompressors in UEs. According to the present invention, the PDCP layer identifies these special packets and selectively transmits the RLC-DATA-REQ primitive only to a particular cell.

The basic information required for the header compressor and the header decompressor in the PDCP layer to compress and decompress a header normally is divided into a static part and a dynamic part. The static and dynamic parts are field values in header to be compressed and decompressed. The static part refers to field values that are not changed, whereas the dynamic part refers to changing field values. An IR packet is transmitted before ROHC header compression and decompression. The IR packet contains the static and dynamic parts. An IR-DYN packet is used to retransmit field values of the dynamic part.

While transmission of ROHC IR and IR-DYN packets will be described for illustrative purposes, it should be noted that the present invention is also applicable to transmission of a control packet for an MBMS service to a particular cell and a particular UE.

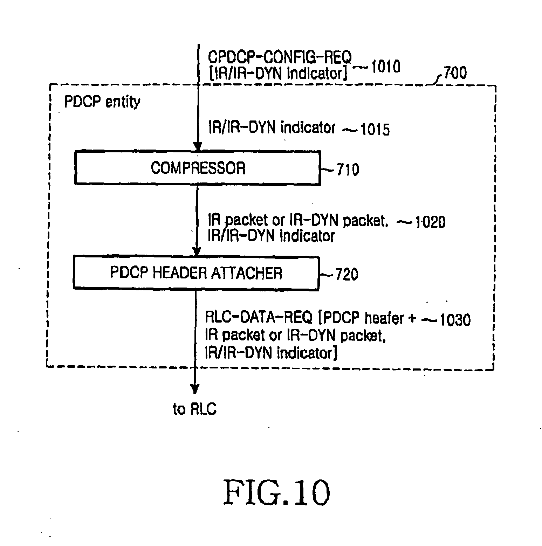

FIG 10 illustrates the configuration and operation of the PDCP entity 700 for selectively transmitting an MBMS control packet according to an embodiment of the present invention. Upon receiving a CPDCP-CONFIG-REQ primitive 1010 including an IR/IR-DYN indicator 1015 from the RRC layer, the received CPDCP-CONFIG-REQ primitive 1010 is fed to the header compressor 710. The IR/IR-DYN indicator 1015 indicates whether a control packet selectively transmitted to a particular cell is an IR packet or an IR-DYN packet.

Referring to FIG 10, the header compressor 710 constructs an IIt or IR-DYN packet according to the value of the IR/IR-DYN indicator 1015 and transmits the packet together with the IR/IR-DYN indicator 1015 to the PDCP header inserter 720. The PDCP header inserter 720 generates an RLC-DATA-REQ primitive 1030 by inserting a PDCP header to the data 1020 received from the header compressor 710 and transmits the RLC-DATA-REQ primitive 1030 to the cell.

The RLC layer participates in scheduling for each cell by exchanging control information with the MAC layer. Because the scheduling is performed based on the channel status of each cell, an RLC entity must be configured for each cell. In more detail, the RLC layer notifies the MAC layer of the amount of stored data at an arbitrary time point, and the MAC layer schedules based on the data state of the RLC layer and the channel state at the time point. The MAC layer notifies the RLC layer of the amount of data to receive and the RLC layer transmits as much data as requested to the MAC layer. The scheduling is performed for each cell. Therefore, the operations of a common RLC entity of an RNC for a plurality of cells will be described separately according to the present invention.

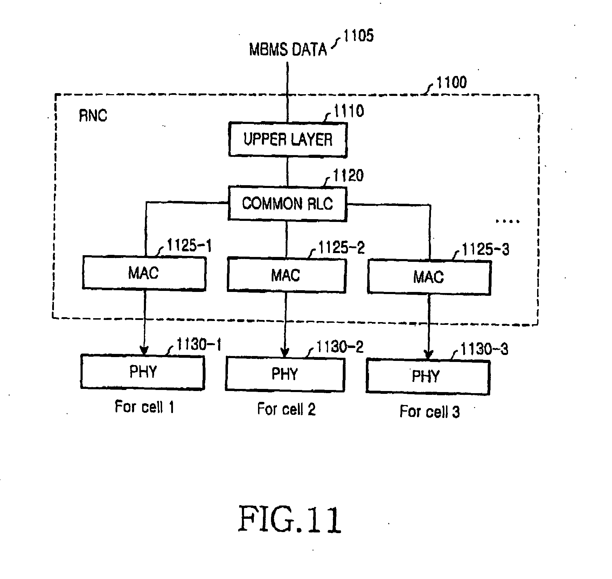

FIG. 11 illustrates a configuration of a processing chain for processing MBMS data in an RNC according to an embodiment of the present invention. When MBMS data is to be transmitted to a plurality of cells, an upper-layer entity 1110 such as a PDCP entity and a common RLC entity 1120 is configured and the RLC entity 620 is connected MAC entities 125-1 to 125-n for respective cells, thereby reducing an RLC buffer size. Although not shown, the upper-layer entity 1110 includes the above-described integrated PDCP entity and its upper-layer entity.

The common RLC entity 1120 buffers data received from the upper-layer entity 1110, and reconstructs the buffered data according to sizes requested by the MAC entities 1125-1 to 1125-n. Then, the common RLC entity 1120 generates RLC PDUs of the requested sizes by attaching RLC headers to the reconstructed data, and transmits the RLC PDUs to corresponding MAC entities.

The operation is performed between the RLC entity 1120 and the MAC entities 125-1 to 125-n in a one-to-one correspondence. More specifically, being informed of a desired data amount from the MAC entity of a cell, the RLC entity 1120 transmits as much data as requested to the MAC entity.

The amount of data to be transmitted is determined according to cell status at a corresponding time point. For example, a first cell 1130-1 (cell 1) has a large amount of available downlink transmission resources and requests a large amount of data from the RLC entity 1120 and a second cell 1130-2 (cell 2) that has very little available downlink resources and requests a small amount of data from the RLC entity 1120. In the same manner, an nth cell 1130-n (cell n) requests a desired data amount to the RLC entity 1120.

The. RLC entity 1120 transmits data to each cell, separately. For example, if the MAC entity 1125-1 of cell 1 requests as much data as a and the MAC entity 1125-2 of cell 2 requests as much data as b, the RLC entity 1120 transmits the requested data for both cells, separately.

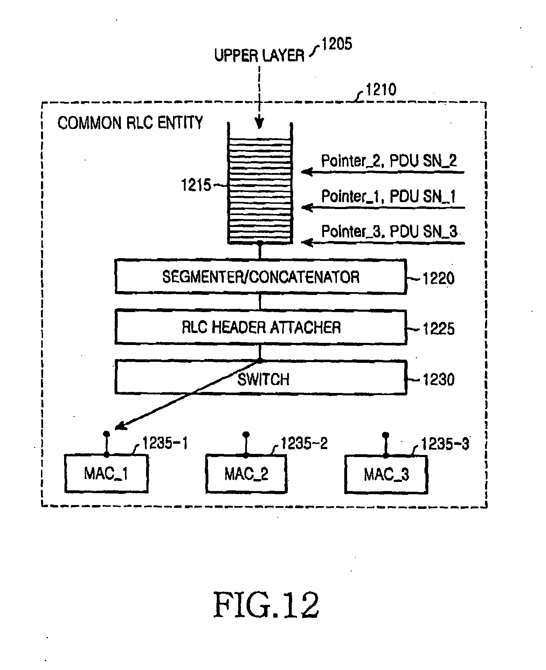

FIG. 12 illustrates a detailed configuration of a common RLC entity according to an embodiment of the present invention. A common RLC entity 1210 operating in a UM includes a common RLC buffer 1215, a segmenter/concatenator 1220, an RLC header attacher 1225, and a switch 1230.

When the RNC provides an MBMS service to a plurality of cells, the common RLC entity 1210 processes MBMS data received from an upper layer 1205 and transmits the processed MBMS data to the cells. In the illustrated case of FIG. 12, an MBMS service is provided to three cells and three MAC entities 1235-1, 1235-2, and 1235-3 are provided for the three cells. That is, the number of the MAC entities 1235-1, 1235-2, and 1235-3 is equal to that of the cells to which the MBMS service is provided.

The common RLC buffer 1215 stores the MBMS data and outputs it upon request from the MAC entities 1235-1, 1235-2, and 1235-3. That is, the MAC entities 1235-1, 1235-2, and 1235-3 notify the common RLC buffer 1215 of their desired data amounts for the respective cells and the common RLC buffer 1215 outputs the buffered MBMS data according to the requests. The common RLC buffer 1215 uses variables Pointer_x and PDU SN_x to manage the data transmission states of the respective cells. Herein, x represents a cell index.

Pomter_x indicates the start point of data to be transmitted to cell x. When the MBMS service starts to be provided to cell x, Pointer_x is initialized to the start address of the common RLC buffer 1215 and moves forward as far as the amount of data transmitted each time the data is transmitted to cell x. For example, if the common RLC buffer 1215 has 10000-bit data and 500-bit data and 300-bit data have been transmitted to cell x and cell y, respectively, Pointer x points the $501^{th}$ bit position counted from the first bit position and Pointer_y points the $301^{th}$ bit position counted from the first bit position.

After transmitting the buffered data of the common RLC buffer 1215 to all the cells, it is discarded and all pointers move backward equally as far as the amount of the discarded data.

Herein below, a description will be made of the case in which the common RLC buffer 1215 is configured to support MBMS service a and stores 1000-bit data received from the upper layer 1205. The MBMS service a is provided to cell 1 and cell 2.

The common RLC buffer 1215 first initializes Pointer_1 and Pointer_2 to the first bit position. When 100 bits and 200 bits have been transmitted to cell 1 and cell 2, respectively, Pointer_1 moves to the $101^{th}$ bit position and Pointer_2 moves to the $201^{th}$ bit position. Because the first 100 bits were transmitted to all the cells being serviced, they are discarded from the RLC buffer 1215 and Pointer and pointer_2 move backward as far as 100 bits. Consequently, 900 bits remain in the common RLC buffer 1215, Pointer_1 points the first bit position and Pointer_2 points the $101^{th}$ bit position.

The usage of PDU SN_x is illustrated in FIG 3 and will be described later in more detail.

The segmenter/concatenator 1220 segments or concatenates the data received from the common RLC buffer 1215 to a predetermined size, PDU_size. The PDU_size information is received from the upper layer 1205.

The RLC header attacher 12225 creates RLC PDUs by attaching RLC headers to the segmented or concatenated data. Each of the RLC headers includes a Sequence Number (SN) and a Length Indicator (LI) needed to reassemble the segmented or concatenated data. The SN is 7 bits and the LI is variable but typically 1G bits. The RLC header attacher 1225 utilizes PDU SN_x received from the upper layer 1205 to determine the SNs of the RLC PDUs.

The switch 1230 switches the RLC PDUs received from the RLC header attacher 1225 to the MAC entities 1235-1 to 1235-n connected to the cells.

The above common RLC entity is configured during configuring the MBMS RB in the MBMS service procedure. Therefore, when configuring the MBMS RB, a MAC/PHY entity is configured for each cell to which the MBMS service is to be provided, and one upper-layer entity and one common RLC entity are configured. Because the PHY entity is configured in a Node B, a detailed description thereof is not provided here.

Referring to FIG 4, the RNC determines cells to which the MBMS service is to be provided and reflects the determination in the MBMS Context that it manages in step 430. The MBMS Context has information about the MBMS service. For example, it includes a list of UEs that want the MBMS service and a list of the cells to which the MBMS service is to be provided. The RNC configures MAC entities for the respective cells referring to the cell list and makes a MAC list using the IDs of the MAC entities (or MAC IDs). The MAC IDs iderttify the MAC entities in the RNC. Different types of MAC entities may exist in the RNC and the MAC IDs have unique values.

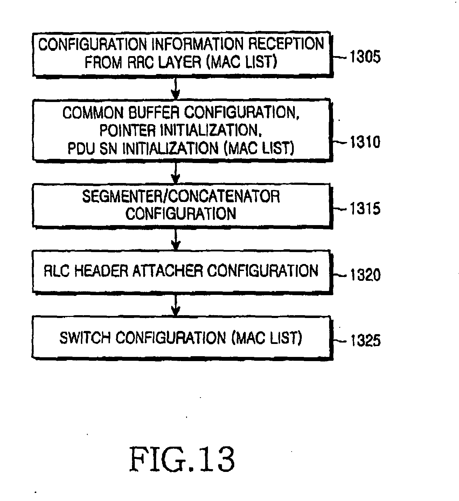

After complete configuration of the MAC entities, a common RLC entity is configured. FIG. 13 is a flowchart illustrating the operation for configuring the common RLC entity according to the embodiment of the present invention. Configuring the common RLC entity means that RLC MBMS information is provided to the common RLC entity corresponding to the RLC layer. The components illustrated in FIG 12 are configured based on the RLC MBMS information.

Referring to FIG. 13, the RRC layer of the RNC transmits configuration information to the common RLC entity in step 1305. The configuration information contains a MAC list having MAC IDs. In step 1310, the common RLC entity configures the common RLC buffer using the MAC list. That is, pointers and PDU SNs are configured in a one-to-one correspondence to the MAC IDs, the pointers are set to an initial value 1, and the PDU SNs are set to an initial value 0.

If MAC_1, MAC_2 and MAC_3 are configured for cell 1, cell 2, and cell 3, respectively, as illustrated in FIG 12, the common RLC buffer configures Pointer_1 and PDU SN_1 and then sets them to their initial values 1 and 0, respectively. Also, the common RLC buffer configures Pointer_2 and PDU SN_2 and then sets them to their initial values 1 and 0, respectively. The common RLC buffer configures Pointer_3 and PDU SN_3 and then sets them to their initial values 1 and 0, respectively.

In step 1315, the common RLC entity configures the segmentcr/concatenator. The segmenter/concatenator is a function block for concatenating or segmenting data to a size set by the common RLC buffer. The common RLC entity configures the RLC header attacher in step 1320. The RLC header attacher is a function block for generating an RLC header including corresponding information under the control of the common RLC buffer. In step 1325, the common RLC entity configures the switch using the MAC list. Accordingly, the switch switches to MAC entities corresponding to the MAC IDs in the MAC list.

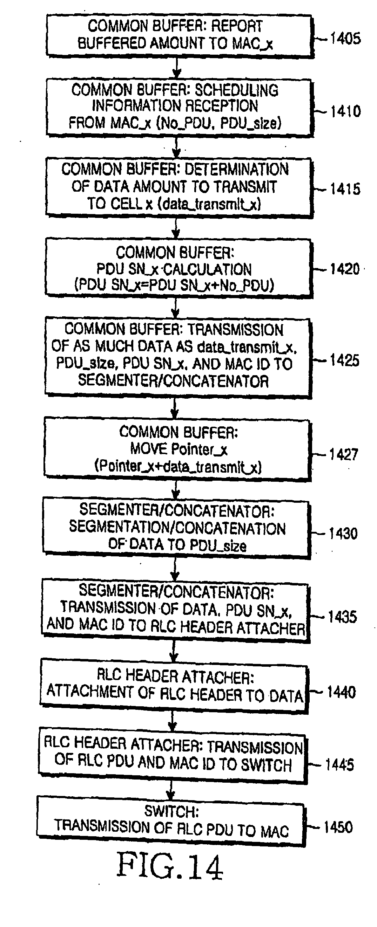

FIG. 14 is a flowchart illustrating an operation for processing data received from an upper layer in the common RLC entity according to an embodiment of the present invention. While only the operation of the common RLC entity for the MAC entity of cell x, MAC_x is illustrated, it is to be appreciated that this operation is carried out for all the MAC entities connected to the common RLC entity through the switch.

Referring to FIG 14, the common RLC buffer notifies MAC_x of the amount of data buffered in the common RLC buffer and destined for cell x, buffer_status_x in step 1405. The buffer_status x is calculated by Equation (1),

$$\text{buffer\_status\_x} = \text{common\_buffer\_total} - \text{Pointer\_x} \qquad \ldots\ldots(1)$$

where common_buffer_total is the total amount of data stored in the common RLC buffer and Pointer_x is the amount of buffered data that has already been transmitted to cell x. MAC_x, upon receipt of the buffer_status_x information, determines the amount of data allowed for MBMA service a based on the radio channel status of cell x. If cell x is congested, a small amount of data is allowed. However, if cell x is not congested, a large amount of data is allowed.

In step 1410, MAC_x determines PDU_size and the number ofPDUs to receive, No_PDU, and transmits the determined information to the common RLC buffer. In step 1415, the common RLC buffer determines the amount of data to be transmitted to cell x by Equation (2).

$$\text{data\_transmit\_x} = \text{No\_PDUx(PDU\_size} - \text{RLC header size)} \qquad \ldots.(2)$$

The common RLC buffer calculates PDU SN_x in step 1420. PDU SN_x is the sum of the previous PDU SN_x and No_PDU. In step 1425, the common RLC buffer transmits, to the segmenter/concatenator, as much data as data transmit_x starting from a position Pointer_x points. The common RLC buffer moves Pointer_x forward as far as data_transmit_x in step 1427.

In step 1430, the segmenter/concatenator segments or concatenates the received data to PDU_size. The segmenter/concatenator transmits the segmented or concatenated data together with PDU SN_x and a MAC ID to the RLC header attacher in step 1435.

In step 1440, the RLC header attacher generates RLC PDUs by attaching RLC headers to the received data. In the same step, the RLC header attacher sets the RLC SNs of the RLC PDUs such that the RLC SN of the last RLC PDU is (PDU SN_x)-1. For example, if five data are received and PDU SN_x is 10. the data is sequentially numbered with SN 5, 6, 7, 8, and 9. In step 1445, the RLC header attacher transmits the RLC PDUs together with the MAC ID to the switch.

In step 1450, the switch transmits the RLC PDUs to MAC_x corresponding to the MAC ID. Then, the RLC PDUs are transmitted to cell x via MAC_x.

As described above, a transmission state is managed on a cell basis and the common RLC buffer transmits data to cells by communicating with the individual MAC entities of the cells. Accordingly, the common RLC entity can service all the cells by use of the single RLC buffer.

The configuration of the common RLC entity operating in the RLC UM has been described above as the first embodiment of the present invention. Herein below, the configuration of a common RLC entity operating in the RLC TM is presented as another embodiment of the present invention. In the RLC TM, the common RLC entity does not perform segmentation/concatenation and RLC header attachment, as compared to the RLC UM. That is, data received from an upper layer is transmitted to a lower layer without processing according to an order from the MAC layer.

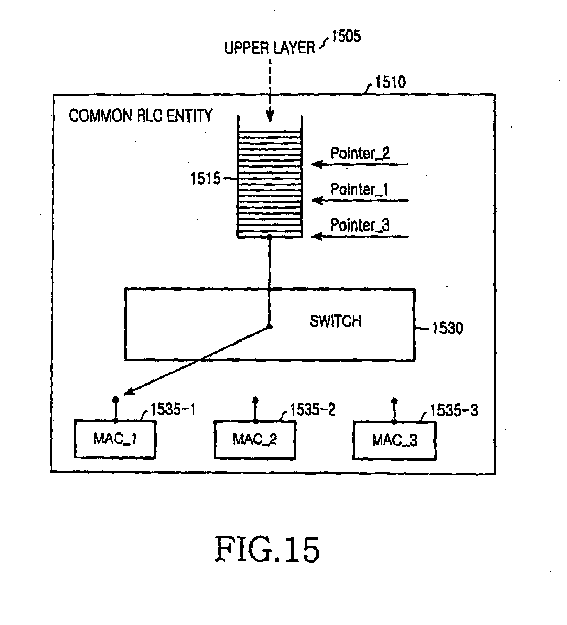

FIG. 15 illustrates the configuration of a common RLC entity according to another embodiment of the present invention. In the illustrated case, an MBMS service is provided to three cells. As illustrated in FIG 15, a common RLC entity 1510 includes a common RLC buffer 1515 and a switch 1530. The common RLC buffer 1515 does not use the variable PDU SN_x but manages the variable Pointer_x according to an RLC PDU.

Referring to FIG 15, the common RLC buffer 1515 stores MBMS data 1505 and transmits the data to the next component upon request from three MAC entities 1535-1, 1535-2, and 1535-3 of the cells. That is, the common RLC buffer 1515 is informed of data amounts requested by the MAC entities 1535-1, 1535-2, and 1535-3, and outputs data according to the requests.

The common RLC buffer 1515 manages data transmission for each cell. Accordingly, the common RLC buffer 1515 manages Pointer_x for each cell. The common RLC buffer 1515 stores data received from an upper layer 1505 in the form of packets called RLC SDUs (Service Data Units). In a TM, the common RLC entity 1510 does not support segmentation/concatenation. Therefore, RLC SDUs are identical to RLC PDUs. Consequently, data is buffered in RLC PDUs in the common RLC buffer 1515.

Pointer_x points the first RLC PDU to be transmitted to cell x. When the MBMS service starts, Pointer_x is set to the first address of the common RLC buffer 1515 and moves forward as far as the number of transmitted PDUs each time the PDUs are transmitted to cell x. For example, if 100 RLC PDUs are stored in the common RLC buffer 1515 and fiver PDUs have already been transmitted to cell x, and three PDUs have already been transmitted to cell y, Pointer_x points the sixth PDU and Pointer_y points the fourth PDU.

After the buffered PDUs in the common RLC buffer 1515 are completely transmitted to the connected cells, they are discarded and all the pointers move backward equally as far as the number of the discarded PDUs.

A description will be made herein below of the case in which the common RLC buffer 1515 is configured to support MBMS service a and stores 10 RLC PDUs received from the upper layer 1505. MBMS service a is provided to cell 1 and cell 2.

Referring to FIG 15, the common RLC buffer 1515 first initializes Pointer_1 and Pointer_2 to the first RLC PDU (i.e., the first RLC SDU). When one PDU and two PDUS have been transmitted to cell 1 and cell 2, respectively, Pointer_1. moves to the second PDU and Pointer_2 moves to the third PDU. Because the first PDU was transmitted to all the cells being serviced, it is discarded from the RLC buffer 1515 and Pointer and Pointer_2 move backward one PDU. Consequently, 9 RLC PDUs remain in the common RLC buffer 1515, Pointer_1 points the first PDU and pointer_2 points the second PDU.

The switch 1530 switches the RLC PDUs received from the common RLC buffer 1515 to the MAC entities 1535-1, 1535-2, and 1535-3 connected to the cells.

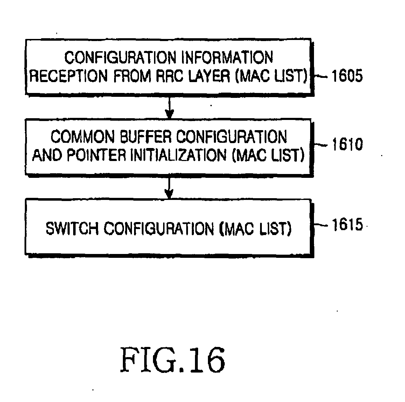

FIG. 16 is a flowchart illustrating an operation for configuring the common RLC entity according to an embodiment of the present invention. After configuring MAC identities, the RNC starts to configure the common RLC entity.

Referring to FIG. 16, the RRC layer of the RNC transmits configuration information to the common RLC entity in step 1605. the configuration information includes a MAC list. In step 1610, the common RLC entity configures the common RLC buffer using the MAC list. More specifically, pointers are created in a one-to-one correspondence to MAC IDs in the MAC list and set to an initial value 1.

In step 1615, the common RLC entity configures the switch using the MAC list. The switch establishes connections to the MAC entities corresponding to the MAC IDs in the MAC list. Accordingly, the common RLC entity for providing a particular MBMS service is completely configured.

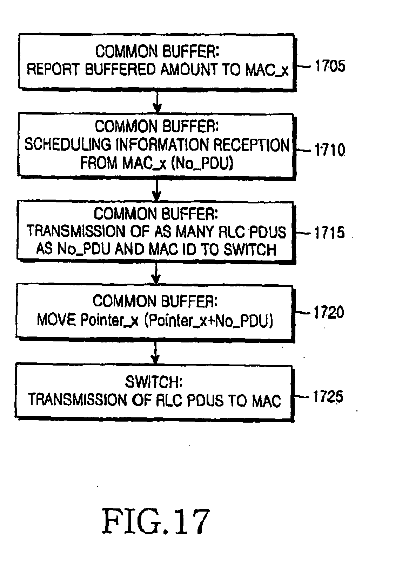

FIG. 17 is a flowchart illustrating an operation for processing data received from an upper layer in the common RLC entity according to an embodiment of the present invention. While only the operation of the common RLC entity for the MAC entity of cell x, MAC_x is illustrated, it is to be appreciated that this operation is carried out for all the MAC entities connected to the common RLC entity through the switch.

Referring to FIG 17, the common RLC buffer notifies MAC_x of the number No_PDU_buffec_x of RLC PDUs destined for cell x and the size of the RLC PDUs in step 1705. No_PDU_buffer_x is (No_PDU_total-Pointer_x). Here, No_PDU_total is the total number of buffered RLC PDUs and Pointer_x is the number of RLC PDUs that have already been transmitted to cell x.

Upon receipt of the No_PDU_buffer_x information, MAC_x determines how many RLC PDUs are to be allowed for MBMA service a based on the radio channel status of cell x. If cell x is congested, a small number of RLC PDUs are allowed. However, if cell x is not congested, a large number of RLC PDUs are allowed.

In step 1710, MAC_x determines the number of RLC PDUs to receive, No_PDU, and transmits the detennined information to the common RLC buffer. In step 1715, the common RLC buffer transmits as many RLC PDUs as No_PDU, starting from the RLC PDU that Pointer_x points. At the same time, the MAC ID is also transmitted to the switch. The common RLC buffer moves Pointer_x forward as far as No_PDU in step 1720.

In step 1725, the switch transmits the RLC PDUs to MAC_x corresponding to the MAC ID. Then, the RLC PDUs are transmitted to-cell x via MAC_x.

While the above embodiments advantageously reduce buffer capacity requirements, some require repeated segmentation/concatenation and header attachment for a plurality of cells. To solve this problem, a common segmenter/concatenator and a common RLC header attacher are used for a plurality of cells in another embodiment of the present invention. According to an embodiment of the present invention, the same SN is used for the cells and RLC SDUs are equally segmented or concatenated for the cells. MBMS data is stored in a buffer for each of cells related to the MBMS service.

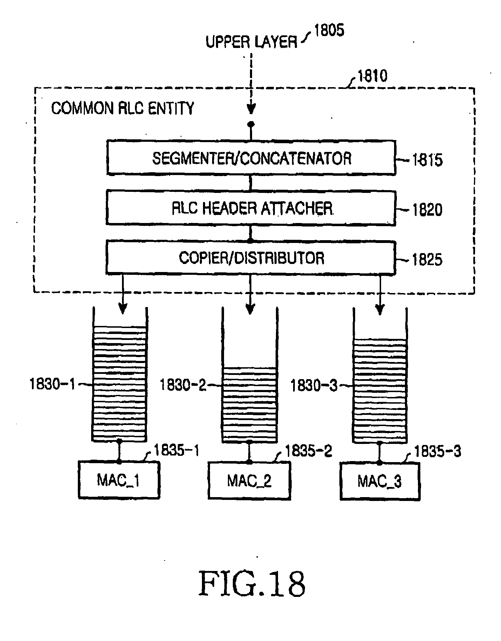

FIG. 18 illustrates the configuration of a common RLC entity according to another embodiment of the present invention. As illustrated in FIG 18, a common RLC entity 1810 includes a segmenter/concatenator 1815, an RLC header attacher 1820, and a copier/distributor 1825. The copier/distributor 1825 is connected to buffers 1830-1, 1830-2, and 1830-3 provided to respective cells. The common RLC entity 1810 operates in a UM.

When the RNC is to provide an MBMS service to a plurality of cells, the common RLC entity 1810 transmits MBMS data received from an upper layer 1805 to the cells. In FIG. 18, the MBMS service is provided to three cells and thus, three MAC entities 1835-1, 1835-2, and 1835-3 are provided for the three cells, respectively.

Referring to FIG. 18, the segmenter/concatenator 1815 segments or concatenates MBMS data (i.e., RLC SDUs) received from an upper layer 1805 to a predetermined size, PDU_size. The PDU_size information is received from the upper layer 1805.

The RLC header attacher 1820 creates RLC PDUs by attaching RLC headers to the segmented or concatenated data. Each RLC header includes an SN and an LI, which is information required to reassemble segmented or concatenated data. The SN is 7 bits and LI is variable, e.g., 16 bits.

The copier/distributor 1825 generates as many copies of the RLC PDUs received from the RLC header attacher 1820 as the number of cells to receive the MBMS service and transmits them to the buffers J 830-1, 1830-2, and 1830-3 corresponding to the respective cells.

The buyers 1830-1, 1830-2, and 1830-3 are connected to the MAC entities 1835-1, 1835-2, and 1835-3, respectively, and store the received same PDUs. As illustrated in FIG 18, if an MBMS service is provided to three cells, the three MAC entities 1835-1, 1835-2, and 1835-3 are configured for the cells in a one-to-one correspondence to the buffers 1830-1, 1830-2, and 1830-3.

The buffers 1830-1, 1830-2. and 1830-3 notify the MAC entities 1835-1, 1835-2, and 1835-3 of the amounts of buffered data and, upon request from a MAC entity, a corresponding buffer transmits buffered data to the MAC entity. More specifically, the MAC entities 1835-1, 1835-2, and 1835-3 notify the buffers 1830-1, 1830-2, and 1830-3 of their desired data amounts, and the buffers 1830-1, 1830-2, and 1830-3 transmit as many RLC PDUs as requested to the MAC entities 1835-1, 1835-2, and 1835-3.

This embodiment of the present invention is characterized in that the same RLC SN is used for cells receiving an MBMS service and MBMS data is equally segmented or concatenated for the cells.

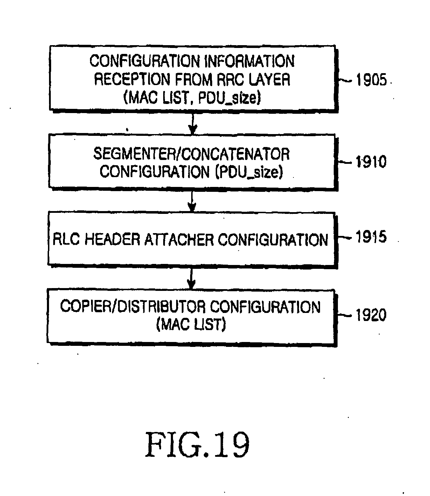

FIG. 19 is a flowchart illustrating the operation for configuring the common RLC entity according to an embodiment of the present invention. After configuring MAC entities, the RNC starts to configure the common RLC entity.

Referring to FIG 19, the RRC layer of the RNC transmits configuration information to the common RLC entity in step 1905. The configuration information includes a MAC list having the IDs of lower-layer MAC entities and PDU_size. In accordance with the present invention, only one PDU_size is used. PDU_size is the only requirement unless otherwise specified. For a packet size PDU_size is usually 320 bits.

In step 1910, the common RLC entity configures the segmenter/concatenator using PDU_size. The segmenter/concatenator is a function block for concatenating or segmenting data to PDU_size. The common RLC entity configures the RLC header attacher in step 1915. The RLC header attacher is a function block for generating an RLC header including corresponding information under the control of the common RLC buffer.

In step 1920, the common RLC entity configures the copier/distributor using the MAC list and connects them to the buffers for the respective cells. The copier/distributor generates as many copies of input RLC PDUs as the number of the buffers and transmits them to the buffers. Each of the buffers stores the RLC PDUs and transmits them to a corresponding MAC entity upon request from the MAC entity. More specifically, each of the buffers notifies a corresponding MAC entity of the amount of buffered data. The MAC entity determines how much data is to be received according to the status of a corresponding cell and requests the decided data amount to the buffer. The buffer then provides as many RLC PDUs as requested to the MAC entity.

While the present invention has been shown and described with reference to certain preferred embodiments thereof, it will be understood by those skilled in the art that various changes in form and details may be made therein without departing from the spirit and scope of the present invention as defined by the appended claims.

**The following is a list of further preferred embodiments of the invention:**

Embodiment 1: A method of providing an MBMS (Multimedia Broadcast/Multicast Service) service to UEs (User Equipments) within a plurality of cells in a mobile communication system, comprising the steps of:

receiving upper-layer protocol data including an upper-layer protocol header and user data for the MBMS service;
compressing the upper-layer protocol header by a predetermined header compression protocol that is common to the plurality of cells;
generating lower-layer protocol data by attaching a PDCP (Packet Data Control Protocol) header to the compressed header and the user data, wherein the PDCP header represents the header compression protocol; and
transmitting the lower-layer protocol data to lower-layer entities corresponding to the cells.

Embodiment 2: The method of embodiment 1, wherein the upper-layer protocol header is an RTP (Real-time Transfer Protocol)/UDP (User Datagram Protocol)/IP (Internet Protocol) header.

Embodiment 3: The method of embodiment 1, wherein the upper-layer protocol header is a UDP/IP header.

Embodiment 4: The method of embodiment 1, further comprising the steps of:

receiving a request message that requests transmission of a control packet for the MBMS service to one of the cells;
generating the control packet according to the request message;
generating lower-layer protocol data by attaching a PDCP header to the control packet; and
transmitting the lower-layer protocol data to a lower-layer entity corresponding to the cell among the lower-layer entities.

Embodiment 5: The method of embodiment 1, wherein the header compression protocol is ROHC (Robust Header Compression).

Embodiment 6: The method of embodiment 5, further comprising the steps of:

receiving a request message from one of the cells, wherein the request message includes an indicator that indicates one of an ROHC initializing & refresh (IR) packet and an initializing & refresh Dynamic (IR-DYN) packet;
generating the one of the ROHC IR packet and the IR-DYN packet according to the indicator;
generating lower-layer protocol data by attaching a PDCP header to the one of the ROHC IR packet and the IR-DYN packet; and
transmitting the lower-layer protocol data to a lower-layer entity corresponding to the cell among the lower-layer entities.

Embodiment 7: The method of embodiment 1, wherein the method is performed by a PDCP entity common to the cells and specific to the MBMS service.

Embodiment 8: The method of embodiment 1, further comprising the steps of:

receiving the lower-layer protocol data;
buffering the received lower-layer protocol data in a buffer common to the cells; and
upon receiving a request from one of the lower-layer entities corresponding to the cells, transmitting the buffered data to the lower-layer entity.

Embodiment 9: The method of embodiment 8, further comprising the step of discarding data transmitted to all the lower-layer entities among the buffered data from the common buffer.

Embodiment 10: The method of embodiment 8, further comprising the step of notifying the lower-layer entities of amounts of buffered data to be transmitted to the lower-layer entities.

Embodiment 11: The method of embodiment 8, further comprising the steps of:

managing pointers corresponding to the lower-layer entities for the common buffer;
upon receiving a request indicating a data amount to receive from one of the lower-layer entities, determining an amount of data to be transmitted to the lower-layer entity based on the requested data amount;
transmitting as much data as the determined amount to the lower-layer entity; and
decreasing the value of a pointer corresponding to the lower-layer entity by the determined amount.

Embodiment 12: The method of embodiment 11, wherein the step transmitting the buffered data comprises the steps of:

segmenting the data output from the buffer to a predetermined data size;
attaching an RLC (Radio Link Control) header having a sequence number (SN) to the segmented data; and
transmitting the RLC header-attached data to the lower-layer entity.

Embodiment 13: The method of embodiment 11, wherein the step of transmitting the buffered data comprises the steps of:

concatenating the data output from the buffer to a predetermined data size;
attaching an RLC (Radio Link Control) header having a sequence number (SN) to the concatenated data; and
transmitting the RLC header-attached data to the lower-layer entity.

Embodiment 14: The method of embodiment 1, further comprising the steps of:

receiving the lower-layer protocol data;
buffering the received lower-layer protocol data in buffers corresponding to the cells; and
transmitting to one of the lower-layer entities the buffered data of a buffer corresponding to the lower-layer entity, upon request from the lower-layer entity.

Embodiment 15: The method of embodiment 14, further comprising the step of notifying each of the lower-layer entities of an amount of data buffered in the buffer corresponding to the lower-layer entity.

Embodiment 16: The method of embodiment 14, wherein the step of transmitting the buffered data comprises the steps of:

receiving a request indicating a data amount to receive from one of the lower-layer entities,
determining the amount of data to be transmitted to the lower-layer entity based on the requested data amount; and
transmitting to the lower-layer entity as much data as the determined amount from the buffer corresponding to the lower-layer entity.

Embodiment 17: The method of embodiment 14, wherein the step of transmitting the buffered data comprises the steps of:

segmenting the data output from the buffer to a predetermined data size;
generating a PDU (Packet Data Unit) by attaching an RLC header having a sequence number (SN) to the segmented data; and
transmitting the PDU to the lower-layer entity.

Embodiment 18: The method of embodiment 14, wherein the step of transmitting the buffered data comprises the steps of:

concatenating the data output from the buffer to a predetermined data size;

generating a PDU (Packet Data Unit) by attaching an RLC header having a sequence number (SN) to the concatenated data; and

transmitting the PDU to the lower-layer entity.

Embodiment 19: A method of configuring a common device for a plurality of cells to provide an MBMS (Multimedia Broadcast/Multicast Service) service to UEs (User Equipments) within the plurality of cells in a mobile communication system, comprising the steps of:

receiving a configuration request message having PDCP (Packet Data Control Protocol) header information and header compression information;

configuring a header compressor using the header compression information, for receiving upper-layer protocol data including an upper-layer protocol header and user data for the MBMS service;

compressing the upper-layer protocol header by a predetermined header compression protocol common to the cells; and

configuring a header attacher using the PDCP header information, for generating lower-layer protocol data by attaching a PDCP header to the compressed header and the user data,

wherein the PDCP header represents the header compression protocol.

Embodiment 20: The method of embodiment 19, wherein the header compression information includes a type of the header compression protocol, types of transmission protocols to which the header compression protocol is available, and a maximum context identifier (CID) value for header compression.

Embodiment 21: The method of embodiment 19, wherein the PDCP header information indicates if the header attacher is to be configured.

Embodiment 22: The method of embodiment 19, further comprising the steps of: receiving a list of lower-layer entities;

configuring a buffer that is common to the cells in order to buffer the lower-layer protocol data;

configuring a plurality of pointers for pointing at positions of data to be transmitted to the lower-layer entities in the common buffer;

setting variables to an initial value, wherein the variables indicate respective sequence numbers (SNs) of data transmitted to the lower-layer entities;

configuring a switch for connecting the common buffer to the lower-layer entities; and

establishing connections between the switch and the lower-layer entities by referring to the list.

Embodiment 23: The method of embodiment 22, wherein the pointers are set to an initial value 0 and incremented by the amount of transmitted data, each time the data is transmitted to the lower-layer entities corresponding to the pointers.

Embodiment 24: The method of embodiment 22, wherein the variables are set to an initial value 1 and updated to the SNs of a last transmitted data, each time data is transmitted to the lower-layer entities corresponding to the variables.

Embodiment 25: The method of embodiment 22, further comprising the steps of:

performing one of segmenting and concatenating data received from the common buffer to a predetermined data size;

generating a PDU (Packet Data Unit) by attaching an RLC header having an SN to the one of segmented and concatenated data; and transmitting the PDU to the switch

Embodiment 26: The method of embodiment 19, further comprising the steps of: receiving a list of the lower-layer entities;

creating as many copies of a PDU (Packet Data Unit) as a number of cells;

distributing the copies;

buffering the distributed data using the list; and

connecting the buffers and the lower-layer entities.

Embodiment 27: The method of embodiment 26, further comprising the steps of:

performing one of segmenting and concatenating the lower-layer protocol data to a predetermined data size; and generating the PDU by attaching an RLC header having a sequence number (SN) to the one of segmented and concatenated data.

Embodiment 28: A radio network controller (RNC) for providing an MBMS (Multimedia Broadcast/Multicast Service) service to UEs (User Equipments) within a plurality of cells, comprising:

a plurality of lower-layer entities corresponding to the cells; and
a PDCP (Packet Data Control Protocol) entity that is common to the cells and specific to the MBMS service, for receiving MBMS data and transmitting the MBMS data to the lower-layer entities.

Embodiment 29: The RNC of embodiment 28, wherein the PDCP entity comprises:

a header compressor for receiving upper-layer protocol data including an upper-layer protocol header and user data for the MBMS service, and for compressing the upper-layer protocol header by a predetermined header compression protocol common to the plurality of cells; and
a PDCP header attacher for generating lower-layer protocol data by attaching a PDCP header to the compressed header and the user data, the PDCP header representing the header compression protocol, and for transmitting the lower-layer protocol data to the lower-layer entities corresponding to the cells.

Embodiment 30: The RNC of embodiment 28, wherein the upper-layer protocol header is an RTP (Real-time Transfer Protocol)/UDP (User Datagram Protocol)/IP (Internet Protocol) header.

Embodiment 31: The RNC of embodiment 28, wherein the upper-layer protocol header is a UDP/IP header.

Embodiment 32: The RNC of embodiment 28, wherein the header compression protocol is ROHC (Robust Header Compression).

Embodiment 33: The RNC of embodiment 29, wherein the PDCP entity, upon receiving a request message requesting transmission of a control packet for the MBMS service to one of the cells, generates the control packet according to the request message, generates lower-layer protocol data by attaching a PDCP header to the control packet, and transmits the lower-layer protocol data to a lower-layer entity corresponding to the cell among the lower-layer entities.

Embodiment 34: The RNC of embodiment 28, further comprising,

an RLC (Radio Link Control) entity that is common to the cells, for connecting the PDCP entity to the lower-layer entities, the RLC entity having a common buffer for receiving the lower-layer protocol data, buffering the received lower-layer protocol data, and transmitting, upon receiving a request from one of the lower-layer entities corresponding to the cells, as much buffered data as requested to the lower-layer entity; and
a switch for switching the data received from the common buffer to the lower-layer entity.

Embodiment 35: The RNC of embodiment 34, wherein the RLC entity discards data transmitted to all the lower-layer entities among the buffered data from the common buffer.

Embodiment 36: The RNC of embodiment 34, wherein the RLC entity notifies the lower-layer entities of amounts of buffered data to be transmitted to the lower-layer entities.

Embodiment 37: The RNC of embodiment 34, wherein the RLC entity manages pointers corresponding to the lower-layer entities for the common buffer, determines, upon receiving a request indicating a data amount to receive from one of the lower-layer entities, an amount of data to be transmitted to the lower-layer entity based on the requested data amount, transmits as much data as the determined amount to the lower-layer entity, and decreases the value of a pointer corresponding to the lower-layer entity by the determined amount.

Embodiment 38: The RNC of embodiment 34, wherein the RLC entity further comprises:

a segmenter/concatenator for performing one of segmenting and concatenating the data output from the buffer to a predetermined data size; and
a header attacher for attaching an RLC header having a sequence number (SN) to the one of segmented and concatenated data and transmitting the RLC header-attached data to the lower-layer entity.

Embodiment 39: The RNC of embodiment 28, further comprising an RLC entity that is common to the cells, for connecting the PDCP entity to the lower-layer entities, the RLC entity having a copier/distributor for creating as many copies of the lower-layer protocol data as a number of the lower-layer entities, and distributing the copies to a plurality of buffers for the respective cells.

Embodiment 40: The RNC of embodiment 39, wherein the RLC entity notifies each of the lower-layer entities of an amount of data buffered in the buffer corresponding to the lower-layer entity.

Embodiment 41: The RNC of embodiment 39, wherein the RLC entity determines, upon receiving a request indicating a data amount to receive from one of the lower-layer entities, an amount of data to be transmitted to the lower-layer entity based on the requested data amount, and transmits to the lower-layer entity as much data as the determined amount from the buffer corresponding to the lower-layer entity.

Embodiment 42: The RNC of embodiment 39, wherein the RLC entity further comprises:

a segmenter/concatenator for performing one of segmenting and concatenating the data output from the buffer to a predetermined data size; and
a header attacher for attaching an RLC header having sequence number (SN) to the one of segmented and concatenated data and transmitting the RLC header-attached data to the lower-layer entity.

Important Note:

While the attached claims relate to a preferred aspect of the present invention, the applicant wishes to reserve the right to file one or several further divisional applications at a later point in time for other aspects disclosed in the application. Those further applications will be divided out from the present divisional application. By this statement, the public is herewith informed that more divisional applications relating to different subject matter may follow.

**Claims**

1. A method of providing an MBMS (Multimedia Broadcast/Multicast Service) service to UEs (User Equipments) within a plurality of cells, comprising the steps of:

receiving upper-layer protocol data including user data for the MBMS service;
buffering the received upper-layer protocol data in a buffer common to the cells;
receiving request from one of lower-layer entities corresponding to the cells; and
transmitting as much buffered data as requested to the lower-layer entity.

2. The method of claim 1, further comprising the step of discarding data transmitted to all the lower-layer entities among the buffered data from the common buffer.

3. The method of claim 1 or 2, further comprising the step of notifying the lower-layer entities of amounts of buffered data to be transmitted to the lower-layer entities.

4. The method of any of claims 1 to 3, further comprising the steps of:

managing pointers corresponding to the lower-layer entities for the common buffer;
determining, upon receiving a request indicating a data amount to receive from one of the lower-layer entities, an amount of data to be transmitted to the lower-layer entity based on the requested data amount;
transmitting as much data as the determined amount to the lower-layer entity; and
decreasing a value of a pointer corresponding to the lower-layer entity by the determined amount.

5. The method of any of claims 1 to 5, wherein the step of transmitting the buffered data comprises the steps of:

segmenting the data output from the buffer to a predetermined data size; attaching an RLC (Radio Link Control) header having a sequence number (SN) to the segmented data; and
transmitting the RLC header-attached data to the lower-layer entity.

6. The method of any of claims 1 to 5, wherein the step of transmitting the buffered data comprises the steps of:

   concatenating the data output from the buffer to a predetermined data size;
   attaching an RLC (Radio Link Control) header having a sequence number (SN) to the concatenated data; and
   transmitting the RLC header-attached data to the lower-layer entity.

7. A method of configuring an RLC (Radio Link Control) entity that is common to a plurality of cells to provide an MBMS (Multimedia Broadcast/Multicast Service) service to UEs (User Equipments) within the cells, comprising the steps of:

   receiving (1605) a list of lower-layer entities corresponding to the cells that are to receive the MBMS service;
   configuring (1610) a buffer common to the cells to buffer upper-layer protocol data including user data for the MBMS service;
   configuring a plurality of pointers to point at positions of data to be transmitted to the lower-layer entities in the common buffer;
   setting variables to an initial value, wherein the variables indicate the respective sequence numbers (SNs) of data which was transmitted to the lower-layer entities;
   configuring (1615) a switch for connecting the common buffer to the lower-layer entities; and
   connecting the switch and the lower-layer entities by referring to the list.

8. The method of claim 7, wherein the pointers are set to an initial value 0 and incremented by the amount of transmitted data each time the data is transmitted to the lower-layer entities corresponding to the pointers.

9. The method of claim 7 or 8, wherein the variables are set to an initial value 1 and updated to the SNs of the last transmitted data each time data is transmitted to the lower-layer entities corresponding to the variables.

10. The method of any of claims 7 to 9, further comprising the steps of:

    segmenting data received from the common buffer to a predetermined data size;
    attaching an RLC header having an SN to the segmented data; and
    transmitting the RLC header-attached data to the switch.

11. The method of any of claims 7 to 10, further comprising the steps of:

    concatenating data received from the common buffer to a predetermined data size;
    attaching an RLC header having an SN to the concatenated data; and
    transmitting the RLC header-attached data to the switch.

12. A radio network controller (RNC) for providing an MBMS (Multimedia Broadcast/Multicast Service) service to UEs (User Equipments) within a plurality of cells, comprising:

    a plurality of lower-layer entities corresponding to the plurality of cells that are to receive the MBMS service; and
    an RLC (Radio Link Control) entity (1505) that is common to the plurality of cells and specific to the MBMS service, for receiving MBMS data, buffering the MBMS data, and transmitting, upon receiving a request from one of the lower-layer entities, the MBMS data to the lower-layer entity.

13. The RNC of claim 12, wherein the RLC entity comprises:

    a common buffer (1515) for the cells, for receiving and buffering upper-layer protocol data including user data for the MBMS service, and outputting as much data as requested by the lower-layer entities; and
    a switch (1530) for transmitting the data received from the common buffer to the lower-layer entities.

14. The RNC of claim 12 or 13, wherein the RLC entity is adapted to discard data transmitted to all the lower-layer entities among the buffered data from the common buffer.

**15.** The RNC of any of claims 12 or 14, wherein the RLC entity is adapted to notify the lower-layer entities of amounts of buffered data to be transmitted to the lower-layer entities.

**16.** The RNC of any of claims 12 to 15, wherein the RLC entity is adapted to manage pointers corresponding to the lower-layer entities for the common buffer, to determine, upon receiving a request indicating a data amount to receive from one of the lower-layer entities, an amount of data to be transmitted to the lower-layer entity based on the requested data amount, to transmit as much data as the determined amount to the lower-layer entity, and to decrease the value of a pointer corresponding to the lower-layer entity by the determined amount.

**17.** The RNC of any of claims 12 to 16, wherein the RLC entity further comprises:

a segmenter/concatenator for performing one of segmenting and concatenating the data output from the buffer to a predetermined data size;
a header attacher for attaching an RLC header having a sequence number (SN) to the one of the segmented and concatenated data; and
transmitting the RLC header-attached data to the lower-layer entity.

**18.** A method of providing an MBMS (Multimedia Broadcast/Multicast Service) service to UEs (User Equipments) within a plurality of cells, comprising the steps of:

receiving upper-layer protocol data including user data for the MBMS service;
buffering the received upper-layer protocol data in a plurality of buffers corresponding to the cells; and
transmitting to one of lower-layer entities corresponding to the cells as much data stored in a buffer corresponding to the lower-layer entity as requested, upon receiving a request from the lower-layer entity.

**19.** The method of claim 18, further comprising the step of notifying the lower-layer entities of amounts of data buffered in the buffers corresponding to the lower-layer entities.

**20.** The method of claim 18 or 19, wherein the step of transmitting buffered data comprises the steps of:

determining, upon receiving a request indicating a data amount to receive from one of the lower-layer entities, an amount of data to be transmitted to the lower-layer entity based on the requested data amount;
transmitting to the lower-layer entity as much data as the determined amount from the buffer corresponding to the lower-layer entity; and
decreasing a value of a pointer corresponding to the lower-layer entity by the determined amount.

**21.** The method of any of claims 18 to 20, wherein the step of transmitting the buffered data comprises the steps of:

segmenting the data output from the buffer to a predetermined data size; and
attaching an RLC (Radio Link Control) header having a sequence number (SN) to the segmented data; and
transmitting the RLC header-attached data to the lower-layer entity.

**22.** The method of any of claims 18 to 21, wherein the step of transmitting the buffered data comprises the steps of:

concatenating the data output from the buffer to a predetermined data size;
attaching an RLC (Radio Link Control) header having a sequence number (SN) to the concatenated data; and
transmitting the RLC header-attached data to the lower-layer entity.

**23.** A method of configuring an RLC (Radio Link Control) entity common to a plurality of cells to provide an MBMS (Multimedia Broadcast/Multicast Service) service to UEs (User Equipments) within the cells, comprising the steps of:

receiving a list of lower-layer entities corresponding to the cells that are to receive the MBMS service;
generating as many copies of upper-layer protocol data including MBMS data as the number of the cells;
distributing the copies to the lower-layer entities;
buffering the distributed data; and
connecting buffers and the lower-layer entities.

**24.** The method of claim 23, further comprising the steps of:

segmenting the upper-layer protocol data to a predetermined data size; and
attaching an RLC header having an SN (Sequence Number) to the segmented data; and
transmitting the RLC header-attached data to a copier/distributor.

**25.** The method of claim 23, further comprising the steps of:

concatenating the upper-layer protocol data to a predetermined data size; attaching an RLC header having an SN (Sequence Number) to the concatenated data; and
transmitting the RLC header-attached data to a copier/distributor.

**26.** A radio network controller (RNC) for providing an MBMS (Multimedia Broadcast/Multicast Service) service to UEs (User Equipments) within a plurality of cells, comprising:

a plurality of lower-layer entities corresponding to the cells that are to receive the MBMS service; and
an RLC (Radio Link Control) entity (1810) that is common to the cells and specific to the MBMS service, for receiving MBMS data, buffering the MBMS data, and
transmitting, upon receiving a request from one of the lower-layer entities, the MBMS data to a buffer corresponding to the lower-layer entity among a plurality of buffers corresponding to the lower-layer entities.

**27.** The RNC of claim 26, wherein the RLC entity notifies the lower-layer entities of amounts of data buffered in the buffers corresponding to the lower-layer entities.

**28.** The RNC of claim 26, wherein the RLC entity determines, upon receiving a request indicating a data amount to receive from one of the lower-layer entities, an amount of data to be transmitted to the lower-layer entity based on the requested data amount, and transmits to the lower-layer entity as much data as the determined amount from the buffer corresponding to the lower-layer entity.

**29.** The RNC of claim 26, wherein the RLC entity further comprises:

a segmenter/concatenator (1815) for receiving upper-layer protocol data including user data for the MBMS service from an upper layer and for performing one of segmenting and concatenating the upper-layer protocol data to a predetermined data size; and
an header attacher (1820) for attaching an RLC header having a sequence number (SN) to the one of the segmented and concatenated data, and
transmitting the RLC header-attached data to a copier/distributor.

FIG.1

FIG.2

FIG.3

FIG.4

FIG.5A

FIG.5B

FIG.6

via Iu interface

_700_

PDCP entity

PDCP-DATA-REQ
[RTP/UDP/IP header + user data] ~705

| COMPRESSOR | ~710

Compressed header + user data ~715

| PDCP HEADER ATTACHER | ~720

RLC-DATA-REQ [PDCP header +
Compressed header + user data] ~725

to RLC

FIG.7

CPDCP-CONFIG-REQ RECEPTION
(PDCP HEADER, HEADER
COMPRESSION INFORMATION) — 805

↓

HEADER COMPRESSOR CONFIGURATION
(HEADER COMPRESSION INFORMATION) — 810

↓

PDCP HEADER CONFIGURATION
(PDCP HEADER) — 815

# FIG.8

PDCP-DATA-REQ RECEPTION — 905

↓

HEADER COMPRESSOR:
HEADER COMPRESSION — 910

↓

PDCP HEADER ATTACHER:
PDCP HEADER ATTACHMENT
AND TRANSMISSION TO RLC — 915

# FIG.9

CPDCP-CONFIG-REQ
[IR/IR-DYN indicator] ~ 1010          ⟋700

┌─────────────────────────────────────────────────┐
│ PDCP entity                                      │
│                                                  │
│          IR/IR-DYN indicator ~ 1015              │
│                                                  │
│     ┌──────────────────────────────┐             │
│     │         COMPRESSOR           │~710         │
│     └──────────────────────────────┘             │
│                                                  │
│          IR packet or IR-DYN packet, ~ 1020      │
│          IR/IR-DYN indicator                     │
│                                                  │
│     ┌──────────────────────────────┐             │
│     │     PDCP HEADER ATTACHER      │~720         │
│     └──────────────────────────────┘             │
│                                                  │
│          RLC-DATA-REQ [PDCP header + ~ 1030      │
│          IR packet or IR-DYN packet,             │
│          IR/IR-DYN indicator]                    │
└─────────────────────────────────────────────────┘

to RLC

# FIG.10

MBMS DATA ⟋1105

```
                          ┌ 1100
  ┌ ─ ─ ─ ─ ─ ─ ─ ─ ─ ─ ─ ─ ─ ─ ─ ─ ─ ─ ─ ─ ┐
  │ RNC                            ┌ 1110    │
  │              ┌──────────────┐            │
  │              │  UPPER LAYER │            │
  │              └──────────────┘  ┌ 1120    │
  │              ┌──────────────┐            │
  │              │  COMMON RLC  │        ....│
  │              └──────────────┘            │
  │  ┌ 1125-1      ┌ 1125-2    ┌ 1125-3      │
  │ ┌───────┐    ┌───────┐   ┌───────┐       │
  │ │  MAC  │    │  MAC  │   │  MAC  │        │
  │ └───────┘    └───────┘   └───────┘       │
  └ ─ ─ ─ ─ ─ ─ ─ ─ ─ ─ ─ ─ ─ ─ ─ ─ ─ ─ ─ ─ ┘
      ┌ 1130-1       ┌ 1130-2     ┌ 1130-3
    ┌───────┐    ┌───────┐   ┌───────┐
    │  PHY  │    │  PHY  │   │  PHY  │
    └───────┘    └───────┘   └───────┘
    For cell 1   For cell 2  For cell 3
```

# FIG.11

UPPER LAYER /1205

/1210

COMMON RLC ENTITY

Pointer_2, PDU SN_2

1215— Pointer_1, PDU SN_1

Pointer_3, PDU SN_3

SEGMENTER/CONCATENATOR —1220

RLC HEADER ATTACHER —1225

SWITCH —1230

/1235-1 /1235-2 /1235-3

MAC_1 MAC_2 MAC_3

# FIG.12

```
┌─────────────────────────────────────┐
│ CONFIGURATION INFORMATION RECEPTION  │
│     FROM RRC LAYER (MAC LIST)        │── 1305
└─────────────────────────────────────┘
                    │
                    ▼
┌─────────────────────────────────────┐
│   COMMON BUFFER CONFIGURATION,       │
│      POINTER INITIALIZATION,         │── 1310
│   PDU SN INITIALIZATION (MAC LIST)   │
└─────────────────────────────────────┘
                    │
                    ▼
┌─────────────────────────────────────┐
│      SEGMENTER/CONCATENATOR          │
│         CONFIGURATION                │── 1315
└─────────────────────────────────────┘
                    │
                    ▼
┌─────────────────────────────────────┐
│  RLC HEADER ATTACHER CONFIGURATION   │── 1320
└─────────────────────────────────────┘
                    │
                    ▼
┌─────────────────────────────────────┐
│   SWITCH CONFIGURATION (MAC LIST)    │── 1325
└─────────────────────────────────────┘
```

# FIG.13

```
┌─────────────────────────────┐
│      COMMON BUFFER: REPORT   │
│    BUFFERED AMOUNT TO MAC_x  │──1405
└─────────────────────────────┘
              │
              ▼
┌─────────────────────────────┐
│   COMMON BUFFER: SCHEDULING  │
│     INFORMATION RECEPTION    │──1410
│  FROM MAC_x (No_PDU, PDU_size)│
└─────────────────────────────┘
              │
              ▼
┌─────────────────────────────┐
│  COMMON BUFFER: DETERMINATION│
│   OF DATA AMOUNT TO TRANSMIT │──1415
│    TO CELL x (data_transmit_x)│
└─────────────────────────────┘
              │
              ▼
┌─────────────────────────────┐
│        COMMON BUFFER:        │
│      PDU SN_x CALCULATION    │──1420
│  (PDU SN_x=PDU SN_x+No_PDU)  │
└─────────────────────────────┘
              │
              ▼
┌─────────────────────────────┐
│  COMMON BUFFER: TRANSMISSION │
│ OF AS MUCH DATA AS data_transmit_x,│
│ PDU_size, PDU SN_x, AND MAC ID TO │──1425
│     SEGMENTER/CONCATENATOR   │
└─────────────────────────────┘
              │
              ▼
┌─────────────────────────────┐
│        COMMON BUFFER:        │
│        MOVE Pointer_x        │──1427
│  (Pointer_x+data_transmit_x) │
└─────────────────────────────┘
              │
              ▼
┌─────────────────────────────┐
│    SEGMENTER/CONCATENATOR:   │
│   SEGMENTATION/CONCATENATION │──1430
│      OF DATA TO PDU_size     │
└─────────────────────────────┘
              │
              ▼
┌─────────────────────────────┐
│    SEGMENTER/CONCATENATOR:   │
│  TRANSMISSION OF DATA, PDU SN_x,│──1435
│ AND MAC ID TO RLC HEADER ATTACHER│
└─────────────────────────────┘
              │
              ▼
┌─────────────────────────────┐
│      RLC HEADER ATTACHER:    │
│ ATTACHMENT OF RLC HEADER TO DATA│──1440
└─────────────────────────────┘
              │
              ▼
┌─────────────────────────────┐
│ RLC HEADER ATTACHER: TRANSMISSION│
│  OF RLC PDU AND MAC ID TO SWITCH │──1445
└─────────────────────────────┘
              │
              ▼
┌─────────────────────────────┐
│           SWITCH:            │
│ TRANSMISSION OF RLC PDU TO MAC│──1450
└─────────────────────────────┘
```

FIG.14

UPPER LAYER ⟋ 1505

⟋ 1510

COMMON RLC ENTITY

Pointer_2

1515 —

Pointer_1

Pointer_3

SWITCH — 1530

⟋ 1535-1     ⟋ 1535-2     ⟋ 1535-3

MAC_1       MAC_2       MAC_3

# FIG.15

CONFIGURATION INFORMATION
RECEPTION FROM RRC LAYER (MAC LIST) — 1605

COMMON BUFFER CONFIGURATION
AND POINTER INITIALIZATION (MAC LIST) — 1610

SWITCH CONFIGURATION (MAC LIST) — 1615

FIG.16

```
┌─────────────────────────────────┐
│        COMMON BUFFER:           │
│ REPORT BUFFERED AMOUNT TO MAC_x │ ── 1705
└─────────────────────────────────┘
                │
                ▼
┌─────────────────────────────────┐
│        COMMON BUFFER:           │
│ SCHEDULING INFORMATION RECEPTION│ ── 1710
│        FROM MAC_x (No_PDU)      │
└─────────────────────────────────┘
                │
                ▼
┌─────────────────────────────────┐
│        COMMON BUFFER:           │
│ TRANSMISSION OF AS MANY RLC PDUS│ ── 1715
│    AS No_PDU AND MAC ID TO SWITCH│
└─────────────────────────────────┘
                │
                ▼
┌─────────────────────────────────┐
│        COMMON BUFFER:           │
│ MOVE Pointer_x (Pointer_x+No_PDU)│ ── 1720
└─────────────────────────────────┘
                │
                ▼
┌─────────────────────────────────┐
│           SWITCH:               │
│ TRANSMISSION OF RLC PDUS TO MAC │ ── 1725
└─────────────────────────────────┘
```

# FIG.17

UPPER LAYER ╱ 1805

╱ 1810

COMMON RLC ENTITY

| SEGMENTER/CONCATENATOR | ~ 1815 |

| RLC HEADER ATTACHER | ~ 1820 |

| COPIER/DISTRIBUTOR | ~ 1825 |

1830-1 ~

1830-2 ~

1830-3 ~

╱ 1835-1

╱ 1835-2

╱ 1835-3

| MAC_1 | MAC_2 | MAC_3 |

# FIG.18

| CONFIGURATION INFORMATION RECEPTION FROM RRC LAYER (MAC LIST, PDU_size) | ~ 1905 |

↓

| SEGMENTER/CONCATENATOR CONFIGURATION (PDU_size) | ~ 1910 |

↓

| RLC HEADER ATTACHER CONFIGURATION | ~ 1915 |

↓

| COPIER/DISTRIBUTOR CONFIGURATION (MAC LIST) | ~ 1920 |

# FIG.19

**European Patent Office**

**EUROPEAN SEARCH REPORT**

Application Number

EP 06 00 4502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/047206 A (LG ELECTRONICS INC) 5 June 2003 (2003-06-05) * abstract * * page 1, line 11 - page 17, line 21 * * page 19, line 5 - page 33, line 9 * * figures 1-11 * | 1-29 | INV. H04L12/56 H04L12/18 H04L29/06 |
| A | "3RD GENERATION PARTNERSHIP PROJECT; TECHNICAL SPECIFICATION GROUP SERVICES AND SYSTEM ASPECTS; MULTIMEDIA BROADCAST/MULTICAST SERVICE (MBMS); ARCHITECTURE AND FUNCTIONAL DESCRIPTION (RELEASE 6)" 3GPP TR 23.846 6.1.0, XX, XX, December 2002 (2002-12), page COMPLETE14, XP002302176 section 5 section 7 | 1-29 | |
| A | ASHOK KUMAR: "UTRAN architecture for Multimedia Broadcast Multicast Service (MBMS)" INTERNATIONAL CONFERENCE ON COMMUNICATION AND BROADBAND NETWORKING, 5 May 2003 (2003-05-05), pages 1-7, XP002263989 * the whole document * | 1-29 | TECHNICAL FIELDS SEARCHED (IPC) H04L |

The present search report has been drawn up for all claims

| Place of search | Date of completion of the search | Examiner |
|---|---|---|
| Munich | 14 June 2006 | Körbler, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 4502

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2006

| Patent document cited in search report | | Publication date | Patent family member(s) | Publication date |
|---|---|---|---|---|
| WO 03047206 | A | 05-06-2003 | AU 2002348615 A1 | 10-06-2003 |
| | | | CN 1422086 A | 04-06-2003 |
| | | | EP 1315341 A1 | 28-05-2003 |
| | | | JP 2003198604 A | 11-07-2003 |
| | | | KR 2003042847 A | 02-06-2003 |
| | | | MA 27161 A1 | 03-01-2005 |
| | | | MX PA04006223 A | 11-10-2004 |
| | | | US 2003099305 A1 | 29-05-2003 |